# EUROPÄISCHE PATENTSCHRIFT

(11) **EP 1 445 137 B1**
(45) Veröffentlichungstag und Bekanntmachung des Hinweises auf die Patenterteilung: **30.07.2008**
(21) Anmeldenummer: 03002865.8
(22) Anmeldetag: 08.02.2003
(51) Int. Cl.: B60J 10/00, B32B 27/12

(54) **Flächengebilde zum Belegen eines Substrates sowie Dichtungselement mit einem Flächengebilde und Verfahren zur Herstellung des Dichtungselementes**
Laminate to cover a substrate, sealing element with laminate and process to produce the sealing element
Structure stratifiée pour couvrir un substrat, joint d'étanchéité avec une structure stratifiée et procédé pour produire ce joint d'étanchéité

(43) Veröffentlichungstag der Anmeldung: 11.08.2004
(73) Patentinhaber: Strähle + Hess GmbH, 75382 Althengstett (DE)
(72) Erfinder: Bahner, Philipp, 71032 Böblingen (DE); Hirlinger, Martin, 72760 Reutlingen (DE); Warnecke, Jürgen, 38642 Goslar (DE)
(74) Vertreter: Hoeger, Stellrecht & Partner Patentanwälte

(56) Entgegenhaltungen:
- EP-A- 0 443 462
- WO-A-99/26801
- DE-A- 4 035 658
- PATENT ABSTRACTS OF JAPAN vol. 018, no. 220 (M-1595), 20. April 1994 (1994-04-20) & JP 06 016044 A (TOYODA GOSEI CO LTD), 25. Januar 1994 (1994-01-25)

## Beschreibung

Die Erfindung betrifft ein Flächengebilde zum Belegen eines Substrates, gemäß dem Oberbegriff von Anspruch 1, insbesondere zum Belegen eines Dichtungsprofiles, mit einer Heißklebefolie und einer Deckschicht. Ein Flächengebilde dieser Art ist aus der DE 4035658 A bekannt.

Außerdem betrifft die Erfindung ein Dichtungselement für Kraftfahrzeuge mit einem Dichtungsprofil und einem auf das Dichtungsprofil zumindest bereichsweise aufgebrachten Flächengebilde sowie ein Verfahren zur Herstellung eines derartigen Dichtungselementes.

Flächengebilde zum Belegen eines Substrates, insbesondere eines Dichtungsprofiles, sind beispielsweise aus der EP 0 884 164 B1 bekannt. Darin wird vorgeschlagen, das Flächengebilde als sogenanntes Flockband auszubilden, das zur Herstellung eines Dichtungselementes auf ein extrudiertes Dichtungsprofil unmittelbar nach dessen Extrusion aufgebracht wird.

Aus der DE 44 43 794 C2 ist ein Flächengebilde in Form eines Textilbelages bekannt, das auf ein Dichtungsprofil aufgebracht wird, welches eine Dichtlippe ausbildet zur Abdichtung von Fensterschächten in Fahrzeugtüren mit absenkbaren Fensterscheiben. Das Flächengebilde bildet eine Gleitschicht, die den Fensterschacht abdichtet und die Fensterscheibe beim Anheben oder Absenken führt.

Das eingangs genannte Flächengebilde umfaßt eine Heißklebefolie und eine Deckschicht. Mittels der Heißklebefolie kann das Flächengebilde kostengünstig auf das Substrat aufgeklebt werden. Es hat sich allerdings gezeigt, daß die Haftung des Flächengebildes auf dem Substrat nicht in allen Fällen den gewünschten Anforderungen entspricht. So kann es vorkommen, daß das auf das Substrat aufgeklebte Flächengebilde Falten wirft, sofern es mit einer Reibungskraft beaufschlagt wird. Außerdem weisen bekannte Flächengebilde den Nachteil auf, daß die Auswahl der Deckschichtmaterialien beschränkt ist durch die zum Einsatz kommende Heißklebefolie, die eine Haftschicht ausbildet zwischen der Deckschicht und dem Substrat. Um die erforderliche Haftung auf dem Substrat sicherzustellen, wird üblicherweise die Heißklebefolie an das Substrat angepaßt. Dies hat zur Folge, daß nicht ein beliebiges Deckschichtmaterial zum Einsatz kommen kann, sondern lediglich Materialien, die mit der durch das Substrat vorgegebenen Heißklebefolie kompatibel sind.

Aufgabe der vorliegenden Erfindung ist es, ein Flächengebilde der eingangs genannten Art derart weiterzubilden, daß unterschiedlichste Deckschichtsmaterialien zum Einsatz kommen können und eine hohe Klebekraft erzielbar ist.

Diese Aufgabe wird bei einem Flächengebilde der gattungsgemäßen Art erfindungsgemäß dadurch gelöst, daß die Heißklebefolie zweischichtig ausgestaltet ist mit einer Oberschicht und einer Unterschicht, die aus unterschiedlichen Kunststoffmaterialien hergestellt sind, und daß das Flächengewicht der Heißklebefolie weniger als 60 g/m² beträgt.

Die zweischichtige Ausgestaltung der Heißklebefolie ermöglicht es, die Heißklebefolie sowohl an das zu belegende Sustrat als auch an die gewünschte Deckschicht derart anzupassen, und daß sowohl auf der Substratseite als auch der Deckschichtseite der Heißklebefolie eine sehr hohe Klebekraft erzielbar ist.

Durch die Limitierung des Flächengewichtes der Heißklebefolie auf weniger als etwa 60 g/m² wird sichergestellt, daß die zweischichtige Ausgestaltung der Heißklebefolie keine Beeinträchtigung des Einsatzzweckes des erfindungsgemäßen Flächengebildes zur Folge hat. So hat sich beispielsweise gezeigt, daß die erfindungsgemäße Beschränkung des Flächengewichtes der Heißklebefolie sicherstellt, daß bei der Verwendung des Flächengebildes zur Herstellung eines Dichtungselementes zur Abdichtung der Türen eines Kraftfahrzeuges keine übermäßig hohen Türschließkräfte auftreten.

Bei einer bevorzugten Ausführungsform ist vorgesehen, daß das Flächengewicht der Heißklebefolie maximal etwa 40 g/m², vorzugsweise maximal etwa 30 g/m² beträgt. Derartige Flächengewichte ermöglichen es in besonders vorteilhafter Weise, das erfindungsgemäße Flächengebilde als Belag für unterschiedlichste Substrate zu verwenden.

Bei einer besonders bevorzugten Ausführungsform des erfindungsgemäßen Flächengebildes beträgt das Flächengewicht der Heißklebefolie ca. 10 g/m² bis etwa 30 g/m². Eine derartige Ausgestaltung hat sich vor allem bei der Verwendung des Flächengebildes zur Herstellung von Dichtungselementen für Kraftfahrzeugtüren als sehr günstig erwiesen, da hierbei sehr geringe Türschließkräfte erzielt werden können.

Wie voranstehend erläutert, ermöglicht es die zweischichtige Ausgestaltung der Heißklebefolie, die Unterschicht aus einem anderem Material herzustellen als die Oberschicht, so daß die Unterschicht zur Erzielung einer besonders hohen Klebekraft an das jeweils zum Einsatz kommende Substrat angepaßt werden kann. Vorzugsweise ist die Unterschicht unter Verwendung eines Polyolefins hergestellt, insbesondere eines Polyethylens oder eines Polypropylens. Eine derartige Ausgestaltung des erfindungsgemäßen Flächengebildes eignet sich insbesondere zum Belegen eines thermoplastischen Elastomers (TPE) oder von Polyvinylchlorid (PVC) oder auch zum Belegen eines aus einem wärmehärtbaren Kunststoff hergestellten Substrates, beispielsweise einem Substrat aus einem Kautschukmaterial, insbesondere aus Ethylen-Propylen-Dien-Monomer-Kautschuk (EPDM). Derartige EPDM-Materialien kommen beispielsweise zur Herstellung von Dichtungsprofilen zum Einsatz, wie sie insbesondere bei Kraftfahrzeugen verwendet werden.

Günstig ist es, wenn das Flächengewicht der Unterschicht maximal etwa 25 g/m² beträgt.

Zur Herstellung der Oberschicht kann ein an die zum Einsatz kommende Deckschicht angepaßtes Material zum Einsatz kommen. Vorzugsweise ist die Oberschicht unter Verwendung zumindest eines Copolymers hergestellt.

Hierbei hat es sich als günstig erwiesen, wenn die Oberschicht unter Verwendung zumindest eines Copolymers von Polyamid, Polyester oder Polyurethan hergestellt ist.

Das Flächengewicht der Oberschicht beträgt vorzugsweise maximal etwa 30 g/m².

Die Deckschicht des erfindungsgemäßen Flächengebildes kann eine Funktionsschicht, beispielsweise als reibungsarme Gleitschicht, ausbilden. Es kann auch vorgesehen sein, die Deckschicht in ästhetisch ansprechender Weise auszugestalten, beispielsweise in Form einer bedruckten oder geprägten Schicht. Mittels der zweischichtigen Heißklebefolie kann die Deckschicht auf unterschiedlichste Substrate aufgeklebt werden, beispielsweise auf Substrate aus Holz, Metall, Kunststoff, Kautschukmaterialien.

Günstig ist es, die Deckschicht als textiles Flächengebilde auszugestalten, insbesondere als Gestrick oder Gewirk. Dies ermöglicht es, das Flächengebilde als auf ein beliebiges Substrat aufklebbarer Textilbelag auszubilden, wobei eine sehr hohe Klebekraft erzielbar ist und zum Verkleben des Textilbelages lediglich die Zufuhr von Wärme erforderlich ist.

Alternativ kann vorgesehen sein, daß die Deckschicht als Flockschicht ausgestaltet ist mit einer Klebeschicht, in die Flockfasern eingebracht sind. Die Deckschicht bildet somit eine Beflockung, wobei die Flockfasern in üblicher Weise elektrostatisch in die oberhalb der Oberschicht der Heißklebefolie angeordnete Klebeschicht eingebracht werden können. Die Klebeschicht dient hierbei zur Stabilisierung der Flockfasern und kann aus einem Lösemittelkleber und/oder einem Dispersionskleber hergestellt sein.

Ist die Deckschicht in Form einer Beflockung ausgestaltet, so hat es sich als günstig erwiesen, wenn die Flockfasern unter Verwendung von Polyester (PE), Polyamid (PA), Polypropylen (PP), Polytetraflurethylen (PTFE), Viscose und/oder Baumwolle hergestellt sind.

Die Flockfasern weisen vorzugsweise eine Länge von ca. 0,3 mm bis etwa 10 mm, vorzugsweise maximal ca. 2 mm auf.

Günstig ist es, wenn die Feinheit der Flockfasern ca. 0,9 dtex bis etwa 22 dtex beträgt.

Insbesondere bei der Ausgestaltung des Flächengebildes als aufklebbarer Flockbelag mit einer Deckschicht in Form einer Beflockung hat es sich als günstig erwiesen, wenn das Flächengebilde eine Verstärkungslage aufweist, die beispielsweise zwischen der Deckschicht und der Heißklebefolie angeordnet sein kann. Dies ermöglicht eine Längs- und auch eine Quer-Stabilisierung der Deckschicht. Es kann auch vorgesehen sein, daß eine Verstärkungslage zwischen der Oberschicht und der Unterschicht der Heißklebefolie positioniert ist.

Die Verstärkungslage ist bei einer bevorzugten Ausführungsform gitterförmig ausgestaltet, beispielsweise in Form eines Geleges. Vorzugsweise kommt ein Kunststoffgelege zum Einsatz. Günstig ist es, wenn die Schussfadendichte und/oder die Kettfadendichte des Geleges mindestens 1 Faden/cm beträgt.

Es kann auch vorgesehen sein, die Verstärkungslage in Form eines Vlieses oder einer temperaturbeständigen Folie auszugestalten.

Wie eingangs erläutert, betrifft die Erfindung auch ein Verfahren zur Herstellung eines Dichtungselementes für Kraftfahrzeuge unter Verwendung eines voranstehend beschriebenen Flächengebildes. Derartige Dichtungselemente kommen beispielsweise im Bereich der Fahrzeugtüren zum Einsatz. Um einerseits geringe Türschließkräfte sicherzustellen und andererseits die Gefahr einer Faltenbildung bei tangentialer Kraftbeaufschlagung des Dichtungselementes zu vermeiden, ist erfindungsgemäß vorgesehen, daß man das voranstehend erläuterte Flächengebilde auf ein Dichtungsprofil zumindest bereichsweise aufbringt.

Das Dichtungsprofil ist vorzugsweise aus TPE, PVC oder einem Kautschukmaterial, beispielsweise aus einem EPDM-Material, gefertigt.

Eine besonders kostengünstige Herstellung des Dichtungselementes kann dadurch erzielt werden, daß man das Dichtungsprofil durch Extrusion herstellt und das Flächengebilde mit dem aufgrund der Extrusion noch eine Restwärme aufweisenden Dichtungsprofil verklebt. Das Flächengebilde kann hierbei als Endlosband bevorratet werden, das nach der Extrusion des Dichtungsprofiles auf dieses aufgelegt wird. Hierbei schmilzt aufgrund der Restwärme des Dichtungsprofiles die Unterschicht der Heißklebefolie auf, so daß das Flächengebilde auf kostengünstige Weise mit dem Dichtungsprofil verklebt werden kann.

Es kann auch vorgesehen sein, daß man das Flächengebilde unter Wärmezufuhr mit dem Dichtungsprofil verklebt.

Die Erfindung betrifft außerdem ein Dichtungselement für Kraftfahrzeuge mit einem Dichtungsprofil und einem auf das Dichtungsprofil zumindest bereichsweise aufgebrachten Flächengebilde der voranstehend erläuterten Art.

Die nachfolgende Beschreibung bevorzugter beispielhafter Ausführungsformen der Erfindung dient im Zusammenhang mit der Zeichnung der näheren Erläuterung. Es zeigen:
- Figur 1:: eine schematische Schnittansicht nach Art einer Explosionszeichnung einer ersten Ausführungsform eines auf ein Substrat aufgelegten erfindungsgemäßen Flächengebildes;
- Figur 2:: eine schematische Schnittansicht entsprechend Figur 1 einer zweiten Ausführungsform eines erfindungsgemäßen Flächengebildes;
- Figur 3:: eine schematische Schnittansicht entsprechend Figur 1 einer dritten Ausführungsform eines erfindungsgemäßen Flächengebildes und
- Figur 4:: eine schematische Schnittansicht eines mit einem erfindungsgemäßen Flächengebilde belegten Dichtungsprofils.

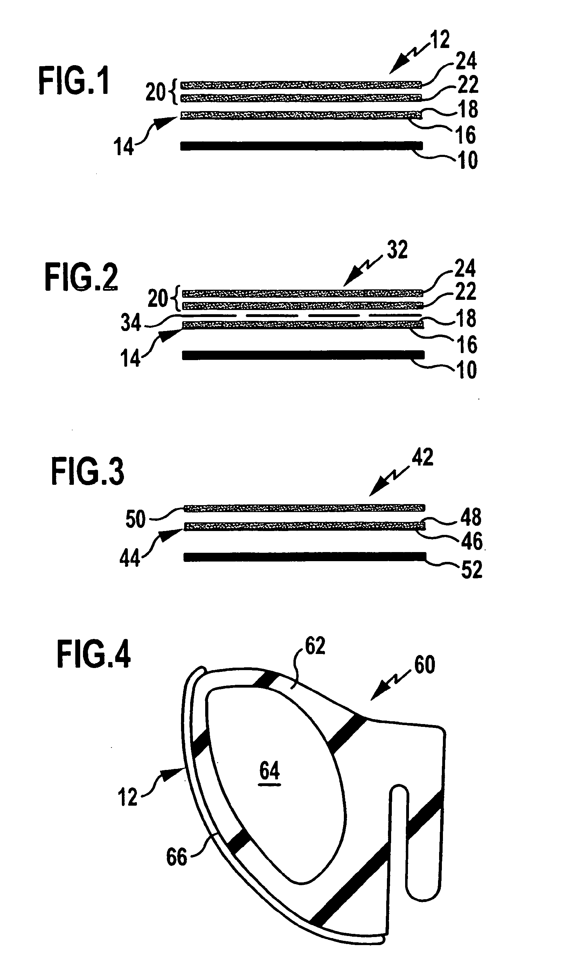

In Figur 1 ist schematisch eine erste Ausführungsform eines auf ein Substrat 10 aufgelegten Flächengebildes dargestellt in Form eines Flockbelages 12. Letzterer umfaßt eine zweischichtige Heißklebefolie 14 mit einer Unterschicht 16 und einer Oberschicht 18. Die Unterschicht ist aus Polyethylen oder aus Polypropylen hergestellt und weist ein Flächengewicht von maximal etwa 25 g/m² auf. Die Oberschicht 18 der Heißklebefolie 14 ist aus einem Copolymer von Polyamid (CoPA) gefertigt und weist ein Flächengewicht von maximal etwa 30 g/m² auf. Die zweischichtige Heißklebefolie 14 ist mittels der dem einschlägigen Fachmann bekannten Blastechnik hergestellt. Alternativ kann die Herstellung der Heißklebefolie 14 auch mittels Koextrusion erfolgen.

Der in Figur 1 dargestellte Flockbelag 12 weist weiter eine Deckschicht 20 auf, die an der Oberschicht 18 haftet und in Form einer Beflockung ausgestaltet ist mit in eine auf der Deckschicht 20 angeordnete Klebeschicht 22 in üblicher Weise elektrostatisch eingebrachten Flockfasern 24.

Die Flockfasern sind aus Polyester, Polyamid, Polypropylen, Polytetraflurethylen, Viscose und/oder Baumwolle hergestellt und weisen eine Feinheit von etwa 0,9 bis 22 dtex, vorzugsweise maximal etwa 17 dtex auf. Die Länge der Flockfasern beträgt 0,3 mm bis etwa 10 mm, vorzugsweise maximal etwa 2,0 mm. Die auf die Deckschicht 20 aufgebrachte Klebeschicht 22 ist aus einem Lösemittelkleber und/oder einem Dispersionskleber hergestellt.

Zur Herstellung des Flockbelages 12 wird auf die in einem vorherigen Verfahrensschritt hergestellte zweischichtige Heißklebefolie 14 die Klebeschicht 22 aufgebracht und letztere anschließend mit den Flockfasern 24 beflockt. Danach wird der somit hergestellte Flockbelag 12 in Streifen geschnitten und auf das Substrat 10, beispielsweise auf ein Gummiprofil, aufgelegt und mit diesem verklebt. Hierzu können der Flockbelag 12 und/oder das Substrat 10 erwärmt werden. Als besonders günstig hat es sich erwiesen, wenn das Substrat 10 durch Extrusion hergestellt wird und der Flockbelag 12 auf das Substrat 10 aufgebracht wird, solange das Substrat 10 noch die erforderliche Restwärme aufweist, um die Heißklebefolie 14 des Flockbelages 12 aufzuschmelzen.

In Figur 2 ist eine zweite Ausführungsform eines erfindungsgemäßen Flächengebildes dargestellt in Form eines Flockbelages 32, der weitgehend identisch ausgestaltet ist wie der voranstehend unter Bezugnahme auf die Figur 1 erläuterte Flockbelag 12, so daß für identische Bauteile dieselben Bezugszeichen verwendet werden wie in Figur 1, zur Vermeidung von Wiederholungen wird diesbezüglich auf die voranstehenden Erläuterungen Bezug genommen.

Der Flockbelag 32 unterscheidet sich vom Flockbelag 12 lediglich dadurch, daß zwischen der Heißklebefolie 14 und der Deckschicht 20 eine Verstärkungslage 34 angeordnet ist in Form eines gitterförmigen Kunststoffgeleges mit einer Schussfadendichte und einer Kettfadendichte im Bereich zwischen 1 Faden/cm und etwa 10 Fäden/cm. Mittels der Verstärkungslage kann eine Stabilisierung der Deckschicht 20 erzielt werden, so daß sich der Flockbelag 32 durch eine sehr hohe mechanische Belastbarkeit auszeichnet. Alternativ zur Ausgestaltung der Verstärkungslage 34 als Gelege kann auch vorgesehen sein, die Verstärkungslage als Vlies oder als temperaturbeständige Folie auszubilden. Die Anordnung der Verstärkungslage 34 ist nicht auf eine Position zwischen Deckschicht 20 und Heißklebefolie 14 beschränkt, alternativ oder ergänzend kann vorgesehen sein, daß zwischen der Unterschicht 16 und der Oberschicht 18 der Heißklebefolie 14 eine Verstärkungslage (nicht dargestellt) angeordnet ist.

In Figur 3 ist eine dritte Ausführungsform eines erfindungsgemäßen Flächengebildes dargestellt in Form eines insgesamt mit dem Bezugszeichen 42 belegten Textilbelages, der eine zweischichtige Heißklebefolie 44 mit einer Unterschicht 46 und einer Oberschicht 48 sowie eine Deckschicht in Form eines Gewebes 50 umfaßt und auf ein Substrat 52 aufgelegt ist. Wiederum ist die Untereschicht der Heißklebefolie 44 aus einem Polyethylen oder einem Propylen hergestellt, und zur Herstellung der Oberschicht 48 wird ein Copolymer von Polyamid verwendet. Im Unterschied zu den in den Figuren 1 und 2 dargestellten Ausführungsformen ist die Deckschicht in Form eines textilen Flächengebildes, im vorliegenden Fall eines Gestrickes oder Gewirkes, ausgestaltet. Entsprechend den voranstehenden Erläuterungen kann der Textilbelag 42 auf kostengünstige Weise auf das Substrat 52 aufgebracht und mit diesem verklebt werden. Hierbei kann durch Wahl der für die Unterschicht 46 und die Oberschicht 48 zum Einsatz kommenden Kunststoffmaterialien eine sehr hohe Klebekraft erzielt werden, ohne daß davon die Auswahl des für das Gestrick oder Gewirk 50 zum Einsatz kommenden Materials beeinträchtigt ist.

In Figur 4 ist schematisch ein unter Verwendung des in Figur 1 dargestellten Flockbelages 12 hergestelltes Dichtungselement für Kraftfahrzeuge dargestellt, das insgesamt mit dem Bezugszeichen 60 belegt ist. Es umfaßt ein als Dichtlippe ausgebildetes, extrudiertes Dichtungsprofil 62 aus einem KautschukMaterial, beispielsweise aus EPDM. Zur Erzielung einer Formelastizität ist das Dichtungsprofil 62 mit einem Hohlraum 64 ausgestattet. Das Dichtungselement 60 kann beispielsweise zur Abdichtung von Fensterschächten in Fahrzeugtüren zum Einsatz kommen. Eine Dichtfläche 66 des Dichtungsprofiles 62 ist mit dem Flockbelag 12 belegt, wobei durch den Einsatz der zweischichtigen Heißklebefolie 14 eine hohe Klebekraft zwischen der Deckschicht 20 des Flockbelages 12 einerseits und der Dichtfläche 66 des Dichtungsprofiles 62 andererseits erzielbar ist. Die Ausbildung von Falten bei der Beaufschlagung des Dichtungselementes 60 mit einer tangential zur Dichtfläche 66 einwirkenden Kraft kann dadurch zuverlässig vermieden werden. Die Elastizität des Dichtungselementes 60 wird durch den Flockbelag 12 praktisch nicht beeinträchtigt, da die Heißklebefolie 14 ein geringes Flächengewicht, vorzugsweise ein Flächengewicht von maximal etwa 30 g/m², aufweist.

Die Herstellung des in Figur 4 dargestellten Dichtungselementes 60 erfolgt dergestalt, daß zunächst das Dichtungsprofil 62 extrudiert wird. Anschließend wird das Flockband 12 auf die Dichtfläche 66 des Dichtungsprofiles 62 aufgelegt, wobei das Dichtungsprofil 62 aufgrund der erfolgten Extrusion noch eine Restwärme aufweist, so daß die Unterschicht 16 der Heißklebefolie 14 aufschmilzt und der Flockbelag 12 unter Ausbildung einer hohen Klebekraft mit dem Dichtungsprofil 62 verklebt wird. Es kann auch vorgesehen sein, daß man das extrudierte Dichtungsprofil 62 nachträglich erwärmt und dann in einem separaten Arbeitsschritt das Flockband 12 oder alternativ auch den Textilbelag 42 auf das Dichtungsprofil 62 aufbringt.

## Patentansprüche

1. Flächengebilde zum Belegen eines Substrates (10; 52) insbesondere eines Dichtungsprofiles, mit einer Heißklebefolie (14; 44) und einer Deckschicht (50; 20) wobei die Heißklebefolie (14; 44) zweischichtig ausgestaltet ist mit einer Oberschicht (18; 48) und einer Unterschicht (16; 46), die aus unterschiedlichen Kunststoffmaterialien hergestellt sind **dadurch gekennzeichnet daß** das Flächengewicht der Heißklebefolie (14; 44) weniger als ca. 60 g/m² beträgt.

2. Flächengebilde nach Anspruch 1, **dadurch gekennzeichnet, daß** das Flächengewicht der Heißklebefolie (14; 44) maximal ca. 40 g/m² beträgt.

3. Flächengebilde nach Anspruch 1 oder 2, **dadurch gekennzeichnet, daß** das Flächengewicht der Heißklebefolie (14; 44) ca. 10 g/m² bis etwa 30 g/m² beträgt.

4. Flächengebilde nach Anspruch 1, 2 oder 3, **dadurch gekennzeichnet, daß** die Unterschicht (16; 46) unter Verwendung eines Polyolefins hergestellt ist.

5. Flächengebilde nach einem der voranstehenden Ansprüche, **dadurch gekennzeichnet, daß** das Flächengewicht der Unterschicht (16,46) maximal etwa 25 g/m² beträgt.

6. Flächengebilde nach einem der voranstehenden Ansprüche, **dadurch gekennzeichnet, daß** die Oberschicht (18; 48) unter Verwendung zumindest eines Copolymers hergestellt ist.

7. Flächengebilde nach einem der voranstehenden Ansprüche, **dadurch gekennzeichnet, daß** die Oberschicht (18; 48) unter Verwendung zumindest eines Copolymers von Polyamid, Polyester oder Polyurethan hergestellt ist.

8. Flächengebilde nach einem der voranstehenden Ansprüche, **dadurch gekennzeichnet, daß** das Flächengewicht der Oberschicht (18; 48) maximal etwa 30 g/m² beträgt.

9. Flächengebilde nach einem der voranstehenden Ansprüche, **dadurch gekennzeichnet, daß** die Deckschicht (50) als textiles Flächengebilde ausgestaltet ist.

10. Flächengebilde nach einem der Ansprüche 1 bis 8, **dadurch gekennzeichnet, daß** die Deckschicht (20) als Flockschicht ausgestaltet ist mit einer Klebeschicht (22), in die Flockfasern (24) eingebracht sind.

11. Flächengebilde nach Anspruch 10, **dadurch gekennzeichnet, daß** die Flockfasern (24) unter Verwendung von Polyester, Polyamid, Polypropylen, Polytetraflurethylen, Viscose und/oder Baumwolle hergestellt sind.

12. Flächengebilde nach Anspruch 10 oder 11, **dadurch gekennzeichnet, daß** die Flockfasern (24) eine Länge von ca. 0,3 mm bis etwa 10 mm aufweisen.

13. Flächengebilde nach Anspruch 10, 11 oder 12, **dadurch gekennzeichnet, daß** die Flockfasern (24) eine Feinheit von ca. 0,9 dtex bis etwa 22 dtex aufweisen.

14. Flächengebilde nach einem der voranstehenden Ansprüche, **dadurch gekennzeichnet, daß** das Flächengebilde (32) eine Verstärkungslage (34) aufweist.

15. Flächengebilde nach Anspruch 14, **dadurch gekennzeichnet, daß** die Verstärkungslage (34) zwischen der Deckschicht (20) und der Heißklebefolie (14) angeordnet ist.

16. Flächengebilde nach Anspruch 14 oder 15, **dadurch gekennzeichnet, daß** eine weitere Verstärkungslage zwischen der Unterschicht (16) und der Oberschicht (18) der Heißklebefolie (14) angeordnet ist.

17. Flächengebilde nach Anspruch 14, 15 oder 16, **dadurch gekennzeichnet, daß** die Verstärkungslage (34) gitterförmig, vliesförmig oder in Form einer temperaturbeständigen Folie ausgestaltet ist.

18. Flächengebilde nach einem der Ansprüche 14 bis 17, **dadurch gekennzeichnet, daß** die Verstärkungslage (34) als Gelege ausgestaltet ist.

19. Verfahren zur Herstellung eines Dichtungselementes für Kraftfahrzeuge unter Verwendung eines Flächengebildes (12; 32; 42) nach einem der voranstehenden Ansprüche, wobei man das Flächengebilde (12; 32; 42) auf ein Dichtungsprofil (62) zumindest bereichsweise aufbringt.

20. Verfahren nach Anspruch 19, **dadurch gekennzeichnet, daß** man das Dichtungsprofil (62) mittels Extrusion herstellt und das Flächengebilde (12; 32; 42) mit dem aufgrund der Extrusion noch eine Restwärme aufweisenden Dichtungsprofil (62) verklebt.

21. Verfahren nach Anspruch 19 oder 20, **dadurch gekennzeichnet, daß** man das Flächengebilde (12; 32; 42) unter Wärmezufuhr mit dem Dichtungsprofil (62) verklebt.

22. Dichtungselement für Kraftfahrzeuge mit einem Dichtungsprofil (62) und einem zumindest bereichsweise auf das Dichtungsprofil (62) aufgebrachten Flächengebilde (12; 32; 42) nach einem der Ansprüche 1 bis 18.

## Claims

1. A flat sheet for covering a substrate (10; 52), in particular a shaped seal, having a heat-activated adhesive film (14; 44) and a top layer (50; 20), the heat-activated adhesive film (14; 44) being two-layered with an upper layer (18; 48) and a lower layer (16; 46) manufactured from different plastics materials, **characterised in that** the mass per unit area of the heat-activated adhesive film (14; 44) is less than approximately 60 g/m².

2. A flat sheet according to claim 1, **characterised in that** the mass per unit area of the heat-activated adhesive film (14; 44) is approximately 40 g/m² at most.

3. A flat sheet according to claim 1 or 2, **characterised in that** the mass per unit area of the heat-activated adhesive film (14; 44) is approximately 10 g/m² to about 30 g/m².

4. A flat sheet according to claim 1, 2 or 3, **characterised in that** the lower layer (16; 46) is manufactured using a polyolefin.

5. A flat sheet according to any one of the preceding claims, **characterised in that** the mass per unit area of the lower layer (16; 46) is approximately 25 g/m² at most.

6. A flat sheet according to any one of the preceding claims, **characterised in that** the upper layer (18; 48) is manufactured using at least one copolymer.

7. A flat sheet according to any one of the preceding claims, **characterised in that** the upper layer (18; 48) is manufactured using at least one copolymer of polyamide, polyester or polyurethane.

8. A flat sheet according to any one of the preceding claims, **characterised in that** the mass per unit area of the upper layer (18; 48) is approximately 30 g/m² at most.

9. A flat sheet according to any one of the preceding claims, **characterised in that** the top layer (50) is in the form of a textile fabric.

10. A flat sheet according to any one of claims 1 to 8, **characterised in that** the top layer (20) is in the form of a flock layer having an adhesive layer (22) into which flock fibres (24) are introduced.

11. A flat sheet according to claim 10, **characterised in that** the flock fibres (24) are manufactured using polyester, polyamide, polypropylene, polytetrafluoroethylene, viscose and/or cotton.

12. A flat sheet according to claim 10 or 11, **characterised in that** the flock fibres (24) have a length of approximately 0.3 mm to about 10 mm.

13. A flat sheet according to claim 10, 11 or 12, **characterised in that** the flock fibres (24) have a yam count of approximately 0.9 dtex to about 22 dtex.

14. A flat sheet according to any one of the preceding claims, **characterised in that** the flat sheet (32) has a reinforcing layer (34).

15. A flat sheet according to claim 14, **characterised in that** the reinforcing layer (34) is arranged between the top layer (20) and the heat-activated adhesive film (14).

16. A flat sheet according to claim 14 or 15, **characterised in that** another reinforcing layer is arranged between the lower layer (16) and the upper layer (18) of the heat-activated adhesive film (14).

17. A flat sheet according to claim 14, 15 or 16, **characterised in that** the reinforcing layer (34) is latticed, in the form of a non-woven material or in the form of a temperature-resistant film.

18. A flat sheet according to any one of claims 14 to 17, **characterised in that** the reinforcing layer (34) is in the form of a layered structure.

19. A method of manufacturing a sealing element for motor vehicles using a flat sheet (12; 32; 42) according to any one of the preceding claims, the flat sheet (12; 32; 42) being applied to a shaped seal (62) at least in regions thereof.

20. A method according to claim 19, **characterised in that** the shaped seal (62) is manufactured by means of extrusion and the flat sheet (12; 32; 42) is stuck to the shaped seal (62) still having residual heat due to the extrusion.

21. A method according to claim 19 or 20, **characterised in that** the flat sheet (12; 32; 42) is stuck to the shaped seal (62) accompanied by the supplying of heat.

22. A sealing element for motor vehicles, having a shaped seal (62) and a flat sheet (12; 32; 42) according to any one of claims 1 to 18 applied to the shaped seal (62) at least in regions thereof.

## Revendications

1. Produit de surface destiné à recouvrir un substrat (10 ; 52), en particulier un profilé d'étanchéité, avec une feuille thermocollante (14 ; 44) et une couche de revêtement (20 ; 50), la feuille thermocollante (14 ; 44) étant conformée en deux couches avec une couche supérieure (18 ; 48) et une couche inférieure (16 ; 46) qui sont réalisées à partir de matières plastiques différentes, **caractérisé en ce que** le grammage de la feuille thermocollante (14 ; 44) est inférieur à environ 60 g/m².

2. Produit de surface selon la revendication 1, **caractérisé en ce que** le grammage de la feuille thermocollante (14 ; 44) est au maximum de 40 g/m² environ.

3. Produit de surface selon la revendication 1 ou 2, **caractérisé en ce que** le grammage de la feuille thermocollante (14 ; 44) va de 10 g/m² environ à 30 g/m² environ.

4. Produit de surface selon la revendication 1, 2 ou 3, **caractérisé en ce que** la couche inférieure (16 ; 46) est réalisée en utilisant une polyoléfine.

5. Produit de surface selon l'une des revendications précédentes, **caractérisé en ce que** le grammage de la couche inférieure (16 ; 46) est au maximum de 25 g/m² environ.

6. Produit de surface selon l'une des revendications précédentes, **caractérisé en ce que** la couche supérieure (18 ; 48) est réalisée en utilisant au moins un copolymère.

7. Produit de surface selon l'une des revendications précédentes, **caractérisé en ce que** la couche supérieure (18 ; 48) est réalisée en utilisant au moins un copolymère de polyamide, de polyester ou de polyuréthane.

8. Produit de surface selon l'une des revendications précédentes, **caractérisé en ce que** le grammage de la couche supérieure (18 ; 48) est au maximum de 30 g/m² environ.

9. Produit de surface selon l'une des revendications précédentes, **caractérisé en ce que** la couche de revêtement (50) est conformée en produit de surface textile.

10. Produit de surface selon l'une des revendications 1 à 8, **caractérisé en ce que** la couche de revêtement (20) est conformée en couche floquée qui comporte une couche adhésive (22) dans laquelle sont incorporées des fibres de flocage (24).

11. Produit de surface selon la revendication 10, **caractérisé en ce que** les fibres de flocage (24) sont réalisées en utilisant du polyester, du polypropylène, du polytétrafluoréthylène, de la viscose et/ou du coton.

12. Produit de surface selon la revendication 10 ou 11, **caractérisé en ce que** les fibres de flocage (24) ont une longueur d'environ 0,3 mm à environ 10 mm.

13. Produit de surface selon la revendication 10, 11 ou 12, **caractérisé en ce que** les fibres de flocage (24) ont une finesse d'environ 0,9 dtex à environ 22 dtex.

14. Produit de surface selon l'une des revendications précédentes, **caractérisé en ce que** le produit de surface (32) comporte une couche de renforcement (34).

15. Produit de surface selon la revendication 14,
**caractérisé en ce que** la couche de renforcement (34) est disposée entre la couche de revêtement (20) et la feuille thermocollante (14).

16. Produit de surface selon la revendication 14 ou 15, **caractérisé en ce qu'**une autre couche de renforcement est disposée entre la couche inférieure (16) et la couche supérieure (18) de la feuille thermocollante (14).

17. Produit de surface selon la revendication 14, 15 ou 16, **caractérisé en ce que** la couche de renforcement (34) est conformée en treillis, en nappe ou en feuille résistant à la température.

18. Produit de surface selon l'une des revendications 14 à 17, **caractérisé en ce que** la couche de renforcement (34) est conformée en non-tissé.

19. Procédé de fabrication d'un élément d'étanchéité pour véhicules automobiles en utilisant un produit de surface (12 ; 32 ; 42) selon l'une des revendications précédentes, dans lequel l'on dépose au moins par zones le produit de surface (12 ; 32 ; 42) sur un profilé d'étanchéité (62).

20. Procédé selon la revendication 19, **caractérisé en ce que** l'on réalise le profilé d'étanchéité (62) par extrusion et que le produit de surface (12 ; 32 ; 42) colle au profil d'étanchéité (62) qui présente encore une chaleur résiduelle due à l'extrusion.

21. Procédé selon la revendication 19 ou 20, **caractérisé en ce que** l'on colle le produit de surface (12 ; 32 ; 42) au profilé d'étanchéité (62) par apport de chaleur.

22. Elément d'étanchéité pour véhicules automobiles comportant un profilé d'étanchéité (62) et un produit de surface (12 ; 32 ; 42) selon l'une des revendications 1 à 18, qui est déposé au moins par zones sur le profilé d'étanchéité (62).
